# EUROPÄISCHE PATENTANMELDUNG

(11) **EP 4 343 723 A1**
(43) Veröffentlichungstag der Anmeldung: **27.03.2024**
(21) Anmeldenummer: 23195332.4
(22) Anmeldetag: 05.09.2023
(51) Int. Cl.: G07C 9/27, F16P 3/08

(54) **SYSTEM ZUR ÜBERWACHUNG EINES ZUGANGSBESCHRÄNKTEN GEFAHRENBEREICHS**

(30) Priorität: 26.09.2022 DE 102022124673
(71) Anmelder: Pilz GmbH & Co. KG, 73760 Ostfildern (DE)
(72) Erfinder: ZELL, Christoph, 73760 Ostfildern (DE); BAUMEISTER, Christoph, 73760 Ostfildern (DE); SCHUSTER, Peter, 73760 Ostfildern (DE)
(74) Vertreter: Schäperklaus, Jochen

(57) **Zusammenfassung**

Die Erfindung betrifft ein System zur Überwachung zumindest eines zugangsbeschränkten Gefahrenbereichs (5a, 5b) einer technischen Anlage (1), wobei innerhalb des zugangsbeschränkten Gefahrenbereichs (5a, 5b) zumindest eine Maschine (4a, 4a', 4a", 4b) angeordnet ist, umfassend:
- eine Sicherheitsschaltvorrichtung (6), die dazu ausgebildet ist, den Betrieb der mindestens einen Maschine (4a, 4a', 4a", 4b) fehlersicher zu steuern,
- zumindest eine Zutrittsvorrichtung (8a, 8a', 8a", 8a‴, 8b, 8b', 8b", 8b‴), die dazu ausgebildet ist, einen Personenzutritt in den zumindest einen Gefahrenbereich (5a, 5b) und ein Verlassen des zumindest einen Gefahrenbereichs (5a, 5b) zu ermöglichen, wobei der zumindest einen Zutrittsvorrichtung (8a, 8a', 8a", 8a‴, 8b, 8b', 8b", 8b‴) eine Zutrittskontrollvorrichtung (10a, 10a', 10a", 10a‴, 10b, 10b', 10b", 10b‴) zugeordnet ist, die dazu ausgebildet ist, zutrittsberechtigte Personen zu authentifizieren, und
- einen Login-Controller (12), der dazu eingerichtet ist, Informationen über das aktuelle Zutrittsgeschehen des zumindest einen Gefahrenbereichs (5a, 5b) und über das historische Zutrittsgeschehen des zumindest einen Gefahrenbereichs (5a, 5b) zu protokollieren, wobei die Sicherheitsschaltvorrichtung (6), dazu ausgebildet ist, auf Anforderung einer authentifizierten, zutrittsberechtigten Person ein Abschaltsignal zum fehlersicheren Abschalten der zumindest einen Maschine (4a, 4a', 4a", 4b) zu erzeugen und ein Wiederanfahren der zumindest einen Maschine (4a, 4a', 4a", 4b) zu verhindern, solange sich noch zumindest eine Person innerhalb des zugehörigen Gefahrenbereichs (5a, 5b) aufhält.

## Beschreibung

Die vorliegende Erfindung betrifft ein System zur Überwachung eines zugangsbeschränkten Gefahrenbereichs.

Nahezu jede industrielle Anlage verfügt über einen oder mehrere sicherheitskritische und daher zugangsbeschränkte Gefahrenbereiche, in denen Maschinen automatisiert arbeiten und in denen im Normalbetrieb und/oder bei Bedienfehlern und/oder bei technischen Defekten eine Gefahr für Leib und Leben des Bedien- und Wartungspersonals beziehungsweise für Schäden an Produktionsmitteln bestehen.

Einerseits müssen solche sicherheitskritischen Gefahrenbereiche durch geeignete Maßnahmen, insbesondere Schutzvorrichtungen, abgesichert sein und andererseits ist bei einem Betreten eines Gefahrenbereichs einer Maschine zur Durchführung von Arbeiten darauf zu achten, dass die Maschine nicht wieder in Betrieb genommen wird, solange sich noch eine Person im Gefahrenbereich der Maschine befindet.

Erschwerend wirkt sich hierbei die Tatsache aus, dass die Gefahrenbereiche industrieller Anlagen häufig sehr unübersichtlich sind und/oder aufgrund der Größe der Anlagen über ganz unterschiedliche Zutrittsmöglichkeiten verfügen, so dass häufig nicht sicher gewährleistet werden kann, dass eine einzelne Person vor der Wiederinbetriebnahme der Maschine die Anwesenheit von weiteren Personen im Gefahrenbereich der Maschine mit der erforderlichen Sicherheit ausschließen kann.

Andererseits wird von den Anlagenherstellern aufgrund des fortschreitenden Trends zur Individualisierung von Produkten und der damit einhergehenden Reduzierung der Losgrößen zusehends mit einer steigenden Modularisierung der Anlagen in Form von räumlich abgeschlossenen Anlagenzellen, in denen jeweils eine oder mehrere Maschinen arbeiten, reagiert. Diese Modularisierung führt in der Regel dazu, dass die Gefahrenbereiche einer industriellen Anlage nicht mehr durch ein übergeordnetes Sicherheitskonzept sinnvoll abgesichert werden können. Somit ist für jede Anlagenzelle der industriellen Anlage ein angepasstes und optimiertes Sicherheitskonzept erforderlich. Vorteilhaft bei einem derartigen zellenorientierten Sicherheitsansatz ist, dass zum Beispiel im Falle einer Wartung oder Prüfung einer einzelnen Anlagenzelle nicht die ganze industrielle Anlage außer Betrieb gesetzt werden muss, sondern dieses zellenweise erfolgen kann. Dieses führt jedoch dazu, dass das Sicherheitssystem, welches zum Beispiel im Wartungsfall die Wiederinbetriebnahme verhindert, einen weiteren Komplexitätsgrad bewältigen muss.

Aus diesem Spannungsfeld heraus ergibt sich die Aufgabe der vorliegenden Erfindung, ein System zur Überwachung zumindest eines zugangsbeschränkten Gefahrenbereichs vorzuschlagen, welches zuverlässig sicherstellen kann, dass sich im Gefahrenbereich bei einem Wiederanfahren der zumindest einen, darin arbeitenden Maschine keine Personen mehr aufhalten, und das zudem eine Dokumentation des historischen Zutrittsgeschehens ermöglicht.

Die Lösung dieser Aufgabe liefert ein System zur Überwachung eines zugangsbeschränkten Gefahrenbereichs mit den Merkmalen des Anspruchs 1. Die Unteransprüche betreffen vorteilhafte Weiterbildungen der Erfindung.

Ein erfindungsgemäßes System zur Überwachung zumindest eines zugangsbeschränkten Gefahrenbereichs einer technischen Anlage, wobei innerhalb des zumindest einen zugangsbeschränkten

Gefahrenbereichs zumindest eine Maschine, insbesondere ein Roboter, angeordnet ist, umfasst
- eine Sicherheitsschaltvorrichtung, die dazu ausgebildet ist, den Betrieb der mindestens einen Maschine fehlersicher zu steuern,
- zumindest eine Zutrittsvorrichtung, die dazu ausgebildet ist, einen Personenzutritt in den zumindest einen Gefahrenbereich und ein Verlassen des zumindest einen Gefahrenbereichs zu ermöglichen, wobei der Zutrittsvorrichtung eine Zutrittskontrollvorrichtung zugeordnet ist, die dazu ausgebildet ist, zutrittsberechtigte Personen zu authentifizieren, und
- einen Login-Controller, der dazu eingerichtet ist, Informationen über das aktuelle Zutrittsgeschehen des zumindest einen Gefahrenbereichs und über das historische Zutrittsgeschehen des zumindest einen Gefahrenbereichs zu protokollieren,
wobei die Sicherheitsschaltvorrichtung dazu ausgebildet ist, auf Anforderung einer authentifizierten, zutrittsberechtigten Person ein Abschaltsignal zum fehlersicheren Abschalten der zumindest einen Maschine zu erzeugen und ein Wiederanfahren der zumindest einen Maschine zu verhindern, solange sich noch zumindest eine Person innerhalb des zugehörigen Gefahrenbereichs aufhält.

Das erfindungsgemäße System hat den Vorteil, dass es auch in großen industriellen Anlagen mit einer Vielzahl von Anlagenzellen, die jeweils einen zugangsbeschränkten Gefahrenbereich aufweisen, eingesetzt werden kann. Das System erkennt, wenn Personen eine der Anlagenzellen zum Beispiel zu Wartungszwecken durch verschiedene Zutrittsorte betreten oder wieder verlassen. Somit kann die mindestens eine automatisiert arbeitende Maschine, die sich innerhalb des Gefahrenbereichs befindet und bei der es sich insbesondere um einen Roboter handeln kann, sofort nach dem Ende der Wartungsarbeiten und nachdem alle Personen den gesicherten Gefahrenbereich verlassen haben unverzüglich erneut gestartet werden. Es muss also nicht gewartet werden, bis die Personen wieder zu ihrem ursprünglichen Zutrittsort zurückgekehrt sind. Ein weiterer Anwendungsfall des hier vorgestellten Systems ist zum Beispiel ein Gebäude mit zumindest zwei Gebäudeteilen, welche durch einen Gefahrenbereich voneinander getrennt sind. Für das Passieren des Gefahrenbereichs wird nach der Zutrittskontrolle (zum Beispiel im ersten Gebäudeteil) die mindestens eine Maschine, die innerhalb des Gefahrenbereichs arbeitet, außer Betrieb gesetzt. Wenn gar keine Rückkehr an den ursprünglichen Ort des Einloggens, also der Zutrittskontrolle, im ersten Gebäudeteil geplant ist, da ein anderer Gebäudeteil betreten werden soll, kann das Ausloggen an der Zutrittsvorrichtung im zweiten Gebäudeteil erfolgen.

Darüber hinaus ist in vorteilhafter Weise auch eine Manipulationssicherheit gegeben, da jeder zum Zutritt berechtigen Person über ein persönliches Identifikationsmittel ein eineindeutiger Code (Personen-ID) zugeordnet werden kann. Somit ist es für unautorisierte Personen nicht möglich, unbemerkt in einen der zugangsbeschränkten Gefahrenbereiche der technischen Anlage einzudringen. Ebenso ist es nicht möglich, die Maschinen im ungesicherten Zustand der Anlagenzellen wieder zu aktivieren und anlaufen zu lassen.

Ein besonderer Vorteil des Systems besteht darin, dass nicht nur das aktuelle, sondern auch das frühere Zutrittsverhalten protokolliert und damit lückenlos dokumentiert werden kann, um zum Beispiel einen Audit Trail zu ermöglichen.

In einer bevorzugten Ausführungsform wird vorgeschlagen, dass der Login-Controller ein flüchtiges Speichermittel aufweist, in dem eine Zutrittskontrollliste mit Informationen über das aktuelle Zutrittsgeschehen innerhalb des zumindest einen Gefahrenbereichs abrufbar gespeichert ist.

In einer besonders bevorzugten Ausführungsform ist vorgesehen, dass der Login-Controller ein nicht-flüchtiges Speichermittel aufweist, in dem eine Zutrittsdokumentationsliste oder eine Zutrittsdokumentationsdatenbank mit Informationen über das historische Zutrittsgeschehen innerhalb des zumindest einen Gefahrenbereichs abrufbar gespeichert ist.

In einer vorteilhaften Ausführungsform besteht die Möglichkeit, dass der Login-Controller dazu ausgebildet ist, nach der Authentifizierung einer Person zum Verlassen des Gefahrenbereichs den zugehörigen Listeneintrag der Person aus der Zutrittskontrollliste zusammen mit einem Zeitstempel, der den Zeitpunkt des Verlassens des Gefahrenbereichs repräsentiert, in die Zutrittsdokumentationsliste oder die Zutrittsdokumentationsdatenbank zu übertragen und den Listeneintrag der Person aus der Zutrittskontrollliste zu löschen. Durch ein Übertragen der Einträge aus der Zutrittskontrollliste, die in dem flüchtigen, temporären Speichermittel gespeichert sind, in die Zutrittsdokumentationsliste oder in die Zutrittsdokumentationsdatenbank, die in dem nicht-flüchtigen Speichermittel abrufbar gespeichert ist, kann nicht nur das aktuelle Zutrittsgeschehen, sondern auch das historische Zutrittsgeschehen der gesamten industriellen Anlage sowie der einzelnen Anlagenzellen beziehungsweise Gefahrenbereiche elektronisch protokolliert und damit auch dokumentiert werden.

In einer besonders vorteilhaften Ausführungsform kann vorgesehen sein, dass die Sicherheitsteuerungseinrichtung dazu ausgebildet ist, beim Empfangen einer Einschaltanforderung einer abgeschalteten Maschine eine Abfrageanforderung zur Abfrage vorhandener Listeneinträge in der Zutrittskontrollliste an den Login-Controller zu senden und dass der Login-Controller dazu ausgebildet ist, nach dem Empfangen dieser Abfrageanforderung in der Zutrittskontrollliste eine Abfrage nach den darin enthaltenen Einträgen durchzuführen und das Ergebnis dieser Abfrage an die Sicherheitssteuerungseinrichtung zu übertragen. Das System ermöglicht dadurch insbesondere auch eine zellenbasierte Wartung der technischen Anlage. Das System erkennt, wenn Personen, wie zum Beispiel der Wartungsdienst, unterschiedliche Anlagenzellen der Anlage warten. Durch einen Abgleich mit den jeweiligen Zutrittskontrolllisten lässt sich eineindeutig überprüfen, in welcher Anlagenzelle beziehungsweise in welchen Anlagenzellen sich derzeit Personen aufhalten, so dass in diesen Anlagenzellen zwingend eine Wiederinbetriebnahme der Maschinen verhindert werden muss. Dieses hat den Vorteil, dass für alle anderen Anlagenzellen die Produktion aufrechterhalten werden kann.

Vorzugsweise kann die Sicherheitssteuerungseinrichtung dazu ausgebildet sein, zumindest ein Ansteuersignal für eine Verriegelungseinrichtung der zumindest einen Zutrittsvorrichtung zu erzeugen, um die Zutrittsvorrichtung nach einer Personenauthentifizierung automatisiert zu entriegeln. Dadurch ist es möglich, die zumindest eine Zutrittsvorrichtung vor dem Betreten und vor dem Verlassen des Gefahrenbereichs automatisiert zu entriegeln. Vorzugsweise kann auch die erneute Verriegelung der zumindest einen Zutrittsvorrichtung mittels der Verriegelungseinrichtung automatisiert erfolgen, indem die Sicherheitssteuerungseinrichtung ein entsprechendes Ansteuersignal erzeugt.

In einer Ausführungsform besteht die Möglichkeit, dass allen Gefahrenbereichen der technischen Anlage eine gemeinsame Zutrittskontrollliste zugeordnet ist.

In einer alternativen Ausführungsform besteht auch die Möglichkeit, dass jedem der Gefahrenbereiche der technischen Anlage jeweils eine eigene Zutrittskontrollliste zugeordnet ist.

In einer Ausführungsform wird vorgeschlagen, dass der Login-Controller als speicherprogrammierbare Steuerung, insbesondere als speicherprogrammierbare Fail-Safe-Steuerung, ausgebildet ist. Der Login-Controller und die Sicherheitssteuerungseinrichtung sind in dieser Ausführungsform zwei separate Komponenten des Systems.

Um einen höheren Systemintegrationsgrad zu erhalten, kann der Login-Controller in einer alternativen Ausführungsform auch integral mit der Sicherheitssteuerungseinrichtung ausgebildet sein.

Weitere Merkmale und Vorteile von Ausführungsbeispielen der Erfindung werden unter Bezugnahme auf die Zeichnungen nachfolgend beschrieben. Es zeigen:
- Fig. 1: eine schematisch stark vereinfachte Draufsicht auf eine technische Anlage mit einem System zur Überwachung zumindest eines zugangsbeschränkten Gefahrenbereichs, das gemäß einem bevorzugten Ausführungsbeispiel der vorliegenden Erfindung ausgeführt ist,
- Fig. 2: eine schematische Darstellung einer Zugangskontrollvorrichtung des Systems.

Es ist nicht notwendig, dass ein erfindungsgemäßes System zur Überwachung zumindest eines zugangsbeschränkten Gefahrenbereichs 5a, 5b alle nachfolgend beschriebenen Merkmale aufweist. Es ist auch möglich, dass ein erfindungsgemäßes System nur einzelne Merkmale der nachfolgend beschriebenen Ausführungsbeispiele aufweist.

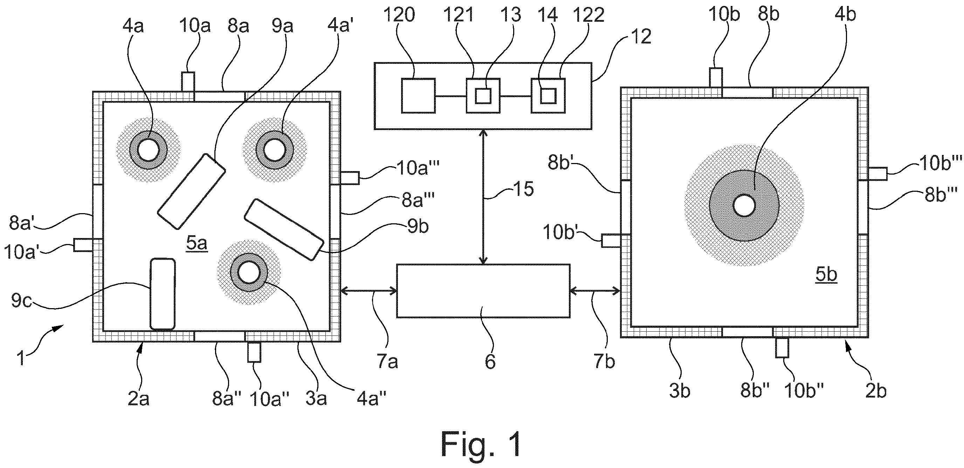

Unter Bezugnahme auf Fig. 1 ist dort eine technische Anlage 1 in einer Draufsicht schematisch sehr stark vereinfacht dargestellt. Die technische Anlage 1 weist in diesem Ausführungsbeispiel exemplarisch zwei Anlagenzellen 2a, 2b auf, die vorliegend jeweils durch einen Zaun 3a, 3b, insbesondere durch einen Metallgitterzaun, räumlich begrenzt sind. Größere technische Anlagen verfügen in der Regel über eine Vielzahl derartiger Anlagenzellen 2a, 2b. In jeder der Anlagenzellen 2a, 2b befinden sich eine oder mehrere automatisiert arbeitende Maschinen 4a, 4a', 4a", 4b, bei denen es sich insbesondere um industrielle Roboter handeln kann.

In diesem Ausführungsbeispiel weist eine erste, in Fig. 1 auf der linken Seite dargestellte Anlagenzelle 2a insgesamt drei automatisiert arbeitende Maschinen 4a, 4a', 4a", insbesondere Roboter, auf. In einer zweiten Anlagenzelle 2b ist demgegenüber eine einzelne, automatisiert arbeitende Maschine 4b, insbesondere ein Roboter, vorgesehen. Die Innenräume der jeweils durch den zugehörigen Zaun 3a, 3b begrenzten Anlagenzellen 2a, 2b bilden jeweils einen zugangsbeschränkten Gefahrenbereich 5a, 5b der betreffenden Anlagenzelle 2a, 2b.

Die technische Anlage 1 weist zudem mindestens eine Sicherheitssteuerungseinrichtung 6 auf, mittels derer der Betrieb der innerhalb der Anlagenzellen 2a, 2b arbeitenden Maschinen 4a, 4a', 4a", 4b fehlersicher gesteuert werden kann. Die Sicherheitssteuerungseinrichtung 6 steht dazu mit jeder der beiden Anlagenzellen 2a, 2b in einer bidirektionalen, vorliegend durch einen Doppelpfeil repräsentierten Kommunikationsverbindung 7a, 7b, über die eine fehlersichere Ansteuerung der Maschinen 4a, 4a', 4a", 4b erfolgen kann.

Die Sicherheitssteuerungseinrichtung 6 ist dazu ausgebildet, während des Betriebs entsprechende Daten von den Anlagenzellen 2a, 2b sicher zu empfangen, sicher auszuwerten und darauf basierend den Betrieb der Maschinen 4a, 4a', 4a", 4b innerhalb der Anlagenzellen 2a, 2b sicher zu steuern. Eine Aufgabe der Sicherheitssteuerungseinrichtung 6 besteht auch darin, die Maschinen 4a, 4a', 4a", 4b beim Auftreten einer Gefahrensituation, die durch ein Meldesignal eines hier nicht explizit dargestellten Meldegeräts signalisiert wird, in einen für Menschen ungefährlichen Zustand zu überführen. Beispiele für derartige Meldegräte sind Not-Aus- und Not-Halt-Schalter sowie - speziell bei Roboteranlagen - auch Zustimmtaster. Die Sicherheitssteuerungseinrichtung 6 ist somit dazu ausgebildet, die Maschinen 4a, 4a', 4a", 4b innerhalb der Anlagenzellen 2a, 2b im Falle eines Fehlers oder einer Störung in einen für Personen ungefährlichen Betriebszustand zu überführen. Dieses erfolgt vorzugsweise für die Anlagenzellen 2a, 2b unabhängig voneinander. Grundsätzlich ist es aber auch möglich, im Falle eines Fehlers oder einer Störung in einer der Anlagenzellen 2a, 2b die Maschinen 4a, 4a', 4a", 4b der gesamten technischen Anlage 1 in einen für Personen ungefährlichen Betriebszustand zu überführen.

Jede der Anlagenzellen 2a, 2b verfügt über eine oder mehrere Zutrittsmöglichkeiten, die vorliegend durch entsprechende Zutrittsvorrichtungen 8a, 8a', 8a", 8a‴, 8b, 8b', 8b", 8b‴ realisiert sind, die zum Beispiel als Zutrittstüren ausgebildet sein können. Vorliegend weist jede der beiden Anlagenzellen 2a, 2b jeweils vier Zutrittsvorrichtungen 8a, 8a', 8a", 8a‴, 8b, 8b', 8b", 8b‴ auf.

Wenn eine oder mehrere Personen eine der Anlagenzellen 2a, 2b - beispielsweise zu Wartungszwecken - betreten möchten und sich damit in einen der Gefahrenbereiche 5a, 5b begeben, muss zuvor durch geeignete Maßnahmen sichergestellt werden, dass jede der Maschinen 4a, 4a', 4a", 4b innerhalb der betreffenden Anlagenzelle 2a, 2b abgeschaltet ist und somit für Personen keine Gefahr mehr darstellt. Erst nach dem Abschalten jeder der Maschinen 4a, 4a', 4a",4b können Personen die betreffende Anlagenzelle 2a, 2b sicher betreten. Ferner muss sichergestellt werden, dass ein Wiederanfahren der Maschinen 4a, 4a', 4a", 4b wirksam verhindert wird, solange sich noch Personen in den Gefahrenbereichen 5a, 5b innerhalb der Anlagenzellen 2a, 2b befinden. Betreten eine oder mehrere Personen den Gefahrenbereich 5a der ersten Anlagenzelle 2a, so werden zuvor die darin arbeitenden Maschinen 4a, 4a' und 4a" abgeschaltet. Die Maschine 4b innerhalb des Gefahrenbereichs 5b der zweiten Anlagenzelle 2b kann demgegenüber weiterlaufen (und umgekehrt), so dass zum Beispiel auch eine zellenbasierte Wartung der Anlage 1 möglich ist.

Mittels des nachfolgend erläuterten Systems, welches zur Überwachung der zugangsbeschränkten Gefahrenbereiche 5a, 5b innerhalb der Anlagenzellen 2a, 2b der technischen Anlage 1 ausgebildet ist, kann sichergestellt werden, dass nur autorisierte und somit tatsächlich zutrittsberechtigte Personen, insbesondere das Wartungs- und Bedienpersonal, die Anlagenzellen 2a, 2b über beliebige Zutrittsvorrichtungen 8a, 8a', 8a", 8a‴, 8b, 8b', 8b", 8b‴betreten und auch wieder verlassen können. Eine Sichtüberprüfung zur Verifizierung, ob sich innerhalb der Gefahrenbereiche 5a, 5b der Anlagenzellen 2a, 2b noch Personen aufhalten oder nicht, ist in der Praxis sehr häufig nicht möglich. Denn innerhalb der Anlagenzellen 2a, 2b können sich zusätzlich zu den Maschinen 4a, 4a', 4a", 4b noch weitere Gegenstände und/oder Einrichtungen befinden, die zusätzliche Sichtbarrieren 9a, 9b, 9c bilden und eine zuverlässige Sichtüberprüfung unmöglich machen. Dieses wurde in Fig. 1 exemplarisch auf der linken Seite für die erste Anlagenzelle 2a durch die dort eingezeichneten Sichtbarrieren 9a, 9b, 9c veranschaulicht.

Jeder der Zutrittsvorrichtungen 8a, 8a', 8a", 8a‴, 8b, 8b', 8b", 8b‴ der Anlagenzellen 2a, 2b ist jeweils eine Zutrittskontrollvorrichtung 10a, 10a', 10a", 10a‴, 10b, 10b', 10b", 10b‴ zugeordnet, die mit der betreffenden Zutrittsvorrichtung 8a, 8a', 8a", 8a‴, 8b, 8b', 8b", 8b‴ funktional zusammenwirkt und mittels derer die Zutrittsberechtigung von Personen in geeigneter Weise überprüft werden kann.

Jede der Zutrittskontrollvorrichtungen 10a, 10a', 10a", 10a‴, 10b, 10b', 10b", 10b‴ ist dazu ausgebildet, Personenidentifikationsdaten, die jeweils eineindeutig bestimmten Personen zugeordnet sind, zu empfangen und - insbesondere durch einen Vergleich mit Zugangsberechtigungsdaten - auszuwerten. Beispielsweise können die Personenidentifikationsdaten, insbesondere in Form einer eineindeutigen Personen-ID, elektronisch in einem persönlichen Identifikationsmittel, welches eine Person mit sich führt, abrufbar gespeichert sein. Bei diesem persönlichen Identifikationsmittel kann es sich zum Beispiel um einen Transponderschlüssel handeln. Dieser Transponderschlüssel kann in eine dafür vorgesehene Leseschnittstelle 100 einer der Zutrittskontrollvorrichtungen 10a, 10a', 10a", 10a‴, 10b, 10b', 10b", 10b‴ eingesteckt werden, mittels derer die in dem Transponderschlüssel gespeicherten Personenidentifikationsdaten ausgelesen werden können, damit sie mit den Zugangsberechtigungsdaten verglichen werden können. Die Datenübertragung vom Identifikationsmittel, insbesondere vom Transponderschlüssel, zur Leseschnittstelle 100 kann in bestimmten Ausführungsformen auch drahtlos, insbesondere über eine sichere, drahtlose Nahfeldkommunikationsschnittstelle, erfolgen. Dann ist es für den Zutrittskontrollprozess ausreichend, das Identifikationsmittel einfach vor die beziehungsweise in die Nähe der Leseschnittstelle 100 der betreffenden Zutrittskontrollvorrichtung 10a, 10a', 10a", 10a‴, 10b, 10b', 10b", 10b‴ zu halten oder - wie es häufig bei Kraftfahrzeugen der Fall ist - das Identifikationsmittel einfach nur mit sich zu führen.

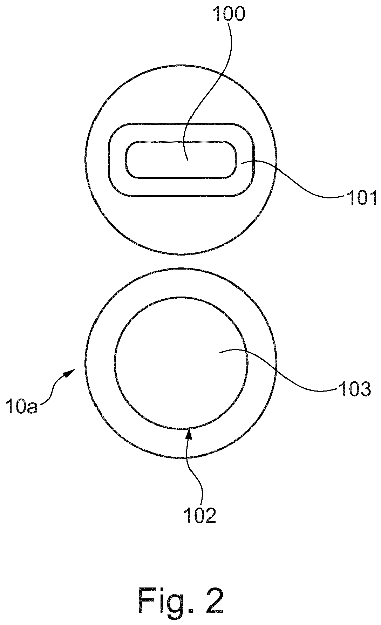

Weitere Einzelheiten einer möglichen Ausführungsform der Zutrittskontrollvorrichtungen 10a, 10a', 10a", 10a‴, 10b, 10b', 10b", 10b‴ werden weiter unten unter Bezugnahme auf Fig. 2 noch näher erläutert. Anstelle eines Transponderschlüssels können auch andere persönliche Identifikationsmittel verwendet werden, in denen Personenidentifikationsdaten abrufbar gespeichert sind.

Durch eine Auswertung der Personenidentifikationsdaten und durch einen Vergleich mit den Zugangsberechtigungsdaten können mittels der Zutrittskontrollvorrichtungen 10a, 10a', 10a", 10a‴, 10b, 10b', 10b", 10b‴ Personen identifiziert werden und durch ein Authentifizierungsverfahren überprüft werden, ob die betreffenden Personen für einen Zutritt in den Gefahrenbereich 5a, 5b der zugehörigen Anlagenzellen 2a, 2b berechtigt sind oder nicht.

Wie weiter unten noch näher erläutert werden wird, werden mittels des hier vorgestellten Systems eine oder mehrere funktional sichere, insbesondere zellenbasierte Zutrittskontrolllisten 13 geführt, mittels derer sowohl der Zutritt als auch das Verlassen der Anlagenzellen 2a, 2b der technischen Anlage 1 dokumentiert wird. Vor dem Betreten einer der Anlagenzellen 2a, 2b werden die Personenidentifikationsdaten einer Person auf die Berechtigung zum Zutritt hin überprüft. Bei positiver Prüfung werden mit einem ersten Zeitstempel (= Zeitpunkt des Zutritts) versehene Daten, aus denen sich zumindest auch die Identität der Person ergibt, in einem temporären, in der zumindest eine Zutrittskontrollliste 13 in einem flüchtigen Speichermittel 121 abrufbar gespeichert. Beim Verlassen des Gefahrenbereichs 13 werden diese Daten wieder aus der Zutrittskontrollliste 13 gelöscht, wobei sämtliche Veränderungen der Zutrittskontrollliste 13 zum Zweck der Anlagendokumentation zusammen mit entsprechenden Zeitstempeln, aus denen sich Informationen über den Zeitpunkt des Betretens (erster Zeitstempel) und über den Zeitpunkt des Verlassens (zweiter Zeitstempel) der jeweiligen Anlagenzelle 2a, 2b der technischen Anlage 1 ergeben, in einem permanenten, nicht-flüchtigen Speichermittel 122 abrufbar gespeichert werden.

Jede der Zutrittskontrollvorrichtungen 10a, 10a', 10a", 10a‴, 10b, 10b', 10b", 10b‴ ist dazu ausgebildet, eine erste Authentifizierungsinformation zur Sicherheitssteuerungseinrichtung 6 zu übertragen, wenn die Überprüfung der Zugangsberechtigung einer Person positiv ist und diese Person somit eine Berechtigung für einen Zutritt in den Gefahrenbereich 5a, 5b der zugehörigen Anlagenzelle 2a, 2b besitzt. Die Sicherheitssteuerungseinrichtung 6 ist dazu ausgebildet, die erste Authentifizierungsinformation auszuwerten. Vorzugsweise kann die Sicherheitssteuerungseinrichtung 6 so ausgeführt sein, dass sie in diesem Zuge auch einen Plausibilitätstest durchführen kann.

Die Sicherheitssteuerungseinrichtung 6 ist ferner dazu ausgebildet, die Maschinen 4a, 4a', 4a", 4b innerhalb der zugehörigen Anlagenzellen 2a, 2b nach dem Empfangen eines Anforderungssignals der zutrittsberechtigten Person sicher außer Betrieb zu setzen und eine hier nicht explizit dargestellte Verriegelungseinrichtung derjenigen Zutrittsvorrichtung 8a, 8a', 8a", 8a‴, 8b, 8b', 8b", 8b‴, an der sich die Person mittels der zugehörigen Zutrittskontrollvorrichtung 10a, 10a', 10a", 10a‴, 10b, 10b', 10b", 10b‴ authentifiziert hat, durch ein entsprechendes Ansteuersignal zu entriegeln. Nachdem die autorisierte und damit zugangsberechtigte Person den Gefahrenbereich 5a, 5b der betreffenden Anlagenzelle 2a, 2b durch die entsprechende Zutrittsvorrichtung 8a, 8a', 8a", 8a‴, 8b, 8b', 8b", 8b‴ betreten hat, wird diese Zutrittsvorrichtung 8a, 8a', 8a", 8a‴, 8b, 8b', 8b", 8b‴ mittels der Verriegelungsvorrichtung wieder selbsttätig verriegelt. Zu den vorstehend genannten Zwecken erzeugt die Sicherheitssteuerungseinrichtung 6 entsprechende Ansteuersignale für die Maschinen 4a, 4a', 4a", 4b und für die Verriegelungseinrichtung, die der betreffenden Zutrittsvorrichtung 8a, 8a', 8a", 8a‴, 8b, 8b', 8b", 8b‴ zugeordnet ist.

Wenn die Zutrittsberechtigung einer Person verifiziert und die Person somit auch authentifiziert wurde, kann diese nach dem Herunterfahren der mindestens einen Maschine 4a, 4a', 4a", 4b, die sich innerhalb der Anlagenzelle 2a, 2b befindet, die Zutrittsvorrichtung 8a, 8a', 8a", 8a‴, 8b, 8b', 8b", 8b‴ öffnen, das Identifikationsmittel aus der Leseschnittstelle 100 entfernen und in die betreffende Anlagenzelle 2a, 2b eintreten. Nur wenn alle zuvor in der jeweiligen Anlagenzelle 2a, 2b angemeldeten Personen diese zu einem späteren Zeitpunkt wieder verlassen haben und sich mit ihrem persönlichen Identifikationsmittel, insbesondere Transponderschlüssel, wieder abgemeldet haben, kann die Zutrittsvorrichtung 8a, 8a', 8a", 8a‴, 8b, 8b', 8b", 8b‴ wieder verriegelt werden, bevor nachfolgend ein Wiederanfahren der mindestens einen Maschine 4a, 4a', 4a", 4b innerhalb der Anlagenzelle 2a, 2b erfolgen kann.

Das hier vorgestellte System verfügt ferner über einen Login-Controller 12, der insbesondere als speicherprogrammierbare Steuerungseinrichtung, vorzugsweise als speicherprogrammierbare Fail-Safe-Steuerungseinrichtung, ausgebildet ist und mit der zentralen Sicherheitssteuerungseinrichtung 6 in einer bidirektionalen Kommunikationsverbindung 15 steht. Vorliegend ist der Login-Controller 12 eine separate Komponente des Systems.

Der Login-Controller 12 weist zumindest ein Prozessormittel 120, ein flüchtiges, temporäres Speichermittel (RAM-Speichermittel) 121 sowie ein nicht-flüchtiges Speichermittel 122 auf. Der Login-Controller 12 weist ferner ein in dem nicht-flüchtigen Speichermittel 122 abrufbar gespeichertes Software-Programm auf, das die Struktur der gesamten technischen Anlage 1 sowie der Anlagenzellen 2a, 2b abbildet und das Instruktionen umfasst, die von dem Prozessormittel 120 während des Betriebs des Systems ausgeführt werden. Innerhalb des flüchtigen Speichermittels 121 wird die oben bereits erwähnte Zutrittskontrollliste 13 gespeichert. Wenn sich eine Person erfolgreich an einer der Zutrittskontrollvorrichtungen 10a, 10a', 10a", 10a‴, 10b, 10b', 10b", 10b‴ angemeldet und somit authentifiziert hat, erhält der Login-Controller 12 von der Sicherheitssteuerungseinrichtung 6 entsprechende personenbezogene Informationen, insbesondere Informationen darüber, welche Person sich zu welcher Uhrzeit (erster Zeitstempel) an welcher der Zutrittskontrollvorrichtungen 10a, 10a', 10a", 10a‴, 10b, 10b', 10b", 10b‴ der Anlagenmodule 2a, 2b authentifiziert hat. Diese Informationen werden von dem Login-Controller 12 verarbeitet und in die Zutrittskontrollliste 13 überführt, die mithilfe des temporären Speichermittels 121 gespeichert wird. Der Login-Controller 12 verfügt ferner über eine Zutrittsdokumentationsliste 14 oder eine Zutrittsdokumentationsdatenbank, die in dem nicht-flüchtigen Speichermittel 122 abrufbar gespeichert ist und mittels derer das gesamte historische Zutrittsgeschehen innerhalb der Anlagenzellen 2a, 2b dokumentiert werden kann. Dadurch wird in vorteilhafter Weise ein Audit Trail der Anlagenzellen 2a, 2b sowie der gesamten technischen Anlage 1 ermöglicht. Alternativ kann der Login-Controller 12 auch in die Sicherheitssteuerungseinrichtung 6 integriert sein. Das Prozessormittel 120 des Login-Controllers 12 kann dann vorzugsweise mit dem Prozessormittel der Sicherheitssteuerungseinrichtung 6 identisch sein. Wenn die Sicherheitssteuerungseinrichtung 6 modular ausgebildet ist, kann der Login-Controller 12 ein Modul dieser Sicherheitssteuerungseinrichtung 6 bilden.

Wenn eine Person die zuvor betretene Anlagenzelle 2a, 2b wieder durch eine der Zutrittsvorrichtungen 8a, 8a', 8a", 8a‴, 8b, 8b', 8b", 8b‴ verlassen möchte, wobei es sich hierbei nicht zwingend um diejenige Zutrittsvorrichtung 8a, 8a', 8a", 8a‴, 8b, 8b', 8b", 8b‴ handeln muss, über die der Zutritt der Person in das Anlagenmodul 2a, 2b, erfolgt ist, muss sie sich wiederum mithilfe der zugehörigen Zutrittskontrollvorrichtung 10a, 10a', 10a", 10a‴, 10b, 10b', 10b", 10b‴ identifizieren und authentifizieren. Dazu wird das Identifikationsmittel, insbesondere der Transponderschlüssel, in die Lesevorrichtung 100 eingesetzt. Bei positiver Authentifizierung wird eine zweite personenbezogene Information von der betreffenden Zutrittskontrollvorrichtung 10a, 10a', 10a", 10a‴, 10b, 10b', 10b", 10b‴ an die Sicherheitssteuerungseinrichtung 6 übermittelt und von dieser verarbeitet. Dabei wird gegebenenfalls erneut ein Plausibilitätstest durchgeführt. Durch ein entsprechendes Ansteuersignal, das von der Sicherheitssteuerungseinrichtung 6 generiert wird, wird die Verriegelungseinrichtung derjenigen Zutrittsvorrichtung 8a, 8a', 8a", 8a‴, 8b, 8b', 8b", 8b‴, an deren Zutrittskontrollvorrichtung 10a, 10a', 10a", 10a‴, 10b, 10b', 10b", 10b" sich die Person authentifiziert hat, entriegelt. Nach dem Verlassen der Anlagenzelle 2a, 2b wird die Zutrittsvorrichtung 8a, 8a', 8a", 8a‴, 8b, 8b', 8b", 8b‴ geschlossen und wieder mittels der zugehörigen Verriegelungseinrichtung automatisiert verriegelt.

Darüber hinaus wird von der Sicherheitssteuerungseinrichtung 6 eine Austrageanforderung für den personenbezogenen Listeneintrag aus der Zutrittskontrollliste 13 generiert und zum Login-Controller 12 übertragen. Der Login-Controller 12 empfängt diese Austrageanforderung des personenbezogenen Listeneintrags, der die zugehörigen Personenidentifikationsdaten (Personen-ID), den ersten Zeitstempel (Zeitpunkt des Zutritts in die Anlagenzelle 2a, 2b) und darüber hinaus auch einen zweiten Zeitstempel (Zeitpunkt des Verlassens der Anlagenzelle 2a, 2b) umfasst, und verarbeitet diese. Der zugehörige personenbezogene Listeneintrag, der in der Zutrittskontrollliste 13 gespeichert ist, wird nachfolgend in der Zutrittsdokumentationsliste 14 beziehungsweise in der Zutrittsdokumentationsdatenbank im nicht-flüchtigen Speichermittel 122 abrufbar gespeichert, so dass auch später anhand historischer Zugangsdaten nachverfolgt werden kann, zu welchen Zeitpunkten welche Personen die Anlagenzellen 2a, 2b jeweils betreten und wieder verlassen haben. Anschließend wird der personenbezogene Listeneintrag aus der Zutrittskontrollliste 13 ausgetragen und somit aus dem nicht-flüchtigen Speichermittel 121 gelöscht.

Wenn eine Person nach dem Verlassen der Anlagenzelle 2a, 2b die darin befindlichen Maschinen 4a, 4a', 4a" beziehungsweise die darin befindliche Maschine 4b erneut in Betrieb setzen möchte und eine entsprechende Bedieneingabe vornimmt, die zur Sicherheitssteuerungseinrichtung 6 übertragen wird, muss sichergestellt sein, dass sich keine weiteren Personen in dem Gefahrenbereich 5a, 5b der betreffenden Anlagenzelle 2a, 2b befinden. Die Sicherheitssteuerungseinrichtung 6 sendet dann eine Abfrageanforderung zur Abfrage der Listeneinträge in der Zutrittskontrollliste 13 an den Login-Controller 12. Der Login-Controller 12 empfängt diese Abfrageanforderung der Listeneinträge und führt eine Abfrage in der Zutrittskontrollliste 13 nach den darin enthaltenen Einträgen durch. Vorzugsweise wird ein binäres Abfrageergebnis, wie zum Beispiel "1" bei einer leeren Zutrittskontrollliste 13 und "0" im Fall einer nicht leeren Zutrittskontrollliste 13, erzeugt und vom Login-Controller 12 zur Sicherheitssteuerungseinrichtung 6 übertragen.

Die Sicherheitssteuerungseinrichtung 6 ist dazu ausgebildet, das Abfrageergebnis des Login Controllers 12 zu empfangen und auszuwerten. Bei dem vorstehend beschriebenen Beispiel empfängt die Sicherheitssteuerungseinrichtung 6 somit entweder das Abfrageergebnis "1" (= Zutrittskontrollliste 13 ist leer) oder "0" (= Zutrittskontrollliste 13 ist nicht leer). Bei dem Ergebnis "1" generiert die Sicherheitsschaltvorrichtung 6 ein oder mehrere Einschaltsignale, um die abgeschaltete(n) Maschine(n) 4a, 4a', 4a", 4b wieder in Betrieb zu setzen. Wird demgegenüber das Abfrageergebnis "0" empfangen, wird von der Sicherheitsteuerungseinrichtung 6 kein Einschaltsignal zum Wiederanfahren der Maschine(n) 4a, 4a', 4a", 4b erzeugt. Die technische Anlage 1 verbleibt somit in ihrem aktuellen Betriebszustand. Der Betrieb der einzelnen Anlagenzellen 2a bzw. 2b kann in vorteilhafter Weise separat gestoppt und wieder gestartet werden, um eine möglichst hohe Produktivität der technischen Anlage 1 zu ermöglichen.

Unter Bezugnahme auf Fig. 2 sollen exemplarisch anhand der Zutrittskontrollvorrichtung 10a weitere Einzelheiten eines möglichen Ausführungsbeispiels der Zutrittskontrollvorrichtungen 10a, 10a', 10a", 10a‴, 10b, 10b', 10b", 10b‴, die vorzugsweise alle identisch ausgeführt sind, näher erläutert werden.

Die Zutrittskontrollvorrichtung 10a umfasst eine Leseschnittstelle 100 zur Aufnahme oder zum drahtlosen Auslesen des Identifikationsmittels, insbesondere des Transponderschlüssels, mit einer Leuchteinrichtung 101, die dazu eingerichtet ist, in zumindest zwei Lichtfarben zu leuchten. Eine erste Lichtfarbe signalisiert einer Person, dass die Leseschnittstelle 100 betriebsbereit ist und somit das Identifikationsmittel aufnehmen oder drahtlos auslesen kann. Eine zweite Leuchtfarbe signalisiert, dass die Leseschnittstelle 100 das Identifikationsmittel, insbesondere den Transponderschlüssel, korrekt ausgelesen hat und die Person authentifiziert hat. Optional kann die Leuchteinrichtung 101 dazu eingerichtet sein, in zumindest einer weiteren Lichtfarbe zu leuchten, um weitere Informationen, wie zum Beispiel einen Lesefehler oder einen Defekt, zu signalisieren.

Die Zutrittskontrollvorrichtung 10a umfasst ferner einen manuell betätigbaren Bedienknopf 102, der vorzugsweise eine integrierte Leuchteinrichtung 103 aufweist, die in zumindest einer ersten Lichtfarbe leuchten kann. Nach dem Auslesen des Identifikationsmittels, insbesondere des Transponderschlüssels, mittels der Leseschnittstelle 100 und der korrekten Personenauthentifizierung, die von der Leuchteinrichtung 101 der Leseschnittstelle 100 durch das Leuchten in der zweiten Lichtfarbe quittiert wird, kann die Person den Bedienknopf 102 manuell betätigen. Diese manuelle Betätigung signalisiert der Sicherheitssteuerungseinrichtung 6 eine Abschaltanforderung für die innerhalb der Anlagenzelle 2a, 2b arbeitenden Maschine(n) 4a, 4a', 4a", 4b. Die Beendigung des Abschaltvorgangs der Maschine(n) 4a, 4a', 4a", 4b und/oder die korrekte Authentifizierung einer Person und der damit verbundene Eintrag in die Zutrittskontrollliste 13 können dadurch quittiert werden, dass die Leuchteinrichtung 103 des Bedienknopfs 102 in der ersten Lichtfarbe, beispielsweise in der Lichtfarbe Grün, leuchtet. Ein Zutritt in die Anlagenzelle 2a, 2b kann dann über die Zutrittsvorrichtung 8a, 8a', 8a", 8a‴, 8b, 8b', 8b", 8b‴ erfolgen und das Identifikationsmittel kann von der Person aus der Leseschnittstelle 100, sofern es physisch in diese eingesteckt war, entfernt werden. Die Leuchteinrichtung 103 des Bedienknopfs 102 kann auch so ausgebildet sein, dass sie in zumindest einer zweiten Lichtfarbe (beispielsweise in der Lichtfarbe Rot) leuchten kann, um zum Beispiel Fehlfunktionen optisch zu visualisieren.

Mittels des hier vorgestellten Systems und des diesem zugrundeliegenden Verfahrens kann sichergestellt werden, dass die Maschinen 4a, 4a', 4a", 4b innerhalb der Gefahrenbereiche 5a, 5b nicht wieder hochgefahren werden können, solange sich noch Personen in dem betreffenden Gefahrenbereich 5a, 5b befinden. Es wird zumindest eine funktional sichere Zutrittskontrollliste 13 geführt, in der sowohl der Zutritt als auch das Verlassen der Gefahrenbereiche 5a, 5b durch entsprechende Zeitstempel dokumentiert wird, d.h. beim Verlassen der Person des Gefahrenbereichs 5a, 5b wird der personenspezifische Identifizierungscode aus der Zutrittskontrollliste 13 gelöscht und vor dem Wiederanfahren der mindestens einen Maschine 4a, 4a', 4a", 4b wird überprüft, ob die Zutrittskontrollliste 13 leer ist. Ist dieses der Fall, so kann die mindestens eine Maschine 4a, 4a', 4a", 4b gestartet werden. Für den Fall, dass die Zutrittskontrollliste 13 nicht leer ist, wird das Wiederanfahren verhindert. Grundsätzlich ist es möglich, dass eine Zutrittskontrollliste 13 für alle zugangsbeschränkten Gefahrenbereiche 5a, 5b verwendet wird. Alternativ ist es auch möglich, für jeden der zugangsbeschränkten Gefahrenbereiche 5a, 5b eine eigene, zellenbezogene Zutrittskontrollliste 13 zu verwenden.

## Patentansprüche

1. System zur Überwachung zumindest eines zugangsbeschränkten Gefahrenbereichs (5a, 5b) einer technischen Anlage (1), wobei innerhalb des zugangsbeschränkten Gefahrenbereichs (5a, 5b) zumindest eine Maschine (4a, 4a', 4a", 4b) angeordnet ist, umfassend:
- eine Sicherheitsschaltvorrichtung (6), die dazu ausgebildet ist, den Betrieb der mindestens einen Maschine (4a, 4a', 4a", 4b) fehlersicher zu steuern,
- zumindest eine Zutrittsvorrichtung (8a, 8a', 8a", 8a‴, 8b, 8b', 8b", 8b‴), die dazu ausgebildet ist, einen Personenzutritt in den zumindest einen Gefahrenbereich (5a, 5b) und ein Verlassen des zumindest einen Gefahrenbereichs (5a, 5b) zu ermöglichen, wobei der zumindest einen Zutrittsvorrichtung (8a, 8a', 8a", 8a‴, 8b, 8b', 8b", 8b"') eine Zutrittskontrollvorrichtung (10a, 10a', 10a", 10a‴, 10b, 10b', 10b", 10b‴) zugeordnet ist, die dazu ausgebildet ist, zutrittsberechtigte Personen zu authentifizieren, und
- einen Login-Controller (12), der dazu eingerichtet ist, Informationen über das aktuelle Zutrittsgeschehen des zumindest einen Gefahrenbereichs (5a, 5b) und über das historische Zutrittsgeschehen des zumindest einen Gefahrenbereichs (5a, 5b) zu protokollieren,
wobei die Sicherheitsschaltvorrichtung (6), dazu ausgebildet ist, auf Anforderung einer authentifizierten, zutrittsberechtigten Person ein Abschaltsignal zum fehlersicheren Abschalten der zumindest einen Maschine (4a, 4a', 4a", 4b) zu erzeugen und ein Wiederanfahren der zumindest einen Maschine (4a, 4a', 4a", 4b) zu verhindern, solange sich noch zumindest eine Person innerhalb des zugehörigen Gefahrenbereichs (5a, 5b) aufhält.

2. System nach Anspruch 1, **dadurch gekennzeichnet, dass** der Login-Controller (12) ein flüchtiges Speichermittel (121) aufweist, in dem eine Zutrittskontrollliste (13) mit Informationen über das aktuelle Zutrittsgeschehen innerhalb des zumindest einen Gefahrenbereichs (5a, 5b) abrufbar gespeichert ist.

3. System nach einem der Ansprüche 1 oder 2, **dadurch gekennzeichnet, dass** der Login-Controller (12) ein nicht-flüchtiges Speichermittel (122) aufweist, in dem eine Zutrittsdokumentationsliste (14) oder eine Zutrittsdokumentationsdatenbank mit Informationen über das historische Zutrittsgeschehen innerhalb des zumindest einen Gefahrenbereichs (5a, 5b) abrufbar gespeichert ist.

4. System nach Anspruch 3, **dadurch gekennzeichnet, dass** der Login-Controller (12) dazu ausgebildet ist, nach der Authentifizierung einer Person zum Verlassen des Gefahrenbereichs (5a, 5b) den zugehörigen Listeneintrag der Person aus der Zutrittskontrollliste (13) zusammen mit einem Zeitstempel, der den Zeitpunkt des Verlassens des Gefahrenbereichs repräsentiert, in die Zutrittsdokumentationsliste (14) oder in die Zutrittsdokumentationsdatenbank zu übertragen und den Listeneintrag der Person aus der Zutrittskontrollliste (13) zu löschen.

5. System nach einem der Ansprüche 2 bis 4, **dadurch gekennzeichnet, dass** die Sicherheitsteuerungseinrichtung (6) dazu ausgebildet ist, beim Empfangen einer Einschaltanforderung einer abgeschalteten Maschine (4a, 4a', 4a", 4b) eine Abfrageanforderung zur Abfrage vorhandener Listeneinträge in der Zutrittskontrollliste (13) an den Login-Controller (12) zu senden und dass der Login-Controller (12) dazu ausgebildet ist, nach dem Empfangen dieser Abfrageanforderung in der Zutrittskontrollliste (13) eine Abfrage nach den darin enthaltenen Einträgen durchzuführen und das Ergebnis dieser Abfrage an die Sicherheitssteuerungseinrichtung (6) zu übertragen.

6. System nach einem der Ansprüche 1 bis 5, **dadurch gekennzeichnet, dass** die Sicherheitssteuerungseinrichtung (6) dazu ausgebildet ist, zumindest ein Ansteuersignal für eine Verriegelungseinrichtung der zumindest einen Zutrittsvorrichtung (8a, 8a', 8a", 8a‴, 8b, 8b', 8b", 8b‴) zu erzeugen, um die Zutrittsvorrichtung (8a, 8a', 8a", 8a‴, 8b, 8b', 8b", 8b‴) nach einer Personenauthentifizierung automatisiert zu entriegeln.

7. System nach einem der Ansprüche 2 bis 6, **dadurch gekennzeichnet, dass** allen Gefahrenbereichen (5a, 5b) der technischen Anlage (1) eine gemeinsame Zutrittskontrollliste (13) zugeordnet ist.

8. System nach einem der Ansprüche 2 bis 6, **dadurch gekennzeichnet, dass** jedem der Gefahrenbereiche (5a, 5b) der technischen Anlage (1) jeweils eine eigene Zutrittskontrollliste (13) zugeordnet ist.

9. System nach einem der Ansprüche 1 bis 8, **dadurch gekennzeichnet, dass** der Login-Controller (12) als speicherprogrammierbare Steuerung, insbesondere als speicherprogrammierbare Fail-Safe-Steuerung, ausgebildet ist.

10. System nach einem der Ansprüche 1 bis 8, **dadurch gekennzeichnet, dass** der Login-Controller (12) integral mit der Sicherheitssteuerungseinrichtung (6) ausgebildet ist.
